# EUROPÄISCHE PATENTSCHRIFT

(11) **EP 0 702 380 B1**
(45) Veröffentlichungstag und Bekanntmachung des Hinweises auf die Patenterteilung: **25.11.1998**
(21) Anmeldenummer: 95114655.4
(22) Anmeldetag: 18.09.1995
(51) Int. Cl.: H01G 2/10, H01G 2/14

(54) **Elektrischer Wickelkondensator**
Roll-type electric capacitor
Condensateur électrique enroulé

(30) Priorität: 19.09.1994 DE 9415166 U
(43) Veröffentlichungstag der Anmeldung: 20.03.1996
(73) Patentinhaber: SIEMENS MATSUSHITA COMPONENTS GmbH & CO. KG, 81617 München (DE)
(72) Erfinder: Utner, Ferdinand, D-93049 Regensburg (DE)
(74) Vertreter: Epping, Wilhelm, Dr.-Ing.

(56) Entgegenhaltungen:
- DE-A- 3 630 815
- DE-A- 4 214 121
- DE-U- 8 624 268

## Beschreibung

Die Erfindung betrifft einen elektrischen Wickelkondensator, insbesondere Leistungskondensator, aus zumindest einem auf einem Kernrohr angeordneten Kondensatorwickel, bei dem die Wickelstirnseiten mit Schoopschichten versehen sind, und der bis auf den Durchführungsbereich für äußere Anschlüsse mit einer Kunststoffumhüllung versehen ist, die aus einem Kunststoffrohr besteht, das an beiden Enden mit einer Kunststoffscheibe verschlossen ist.

Ein derartiger Wickelkondensator ist aus der DE 42 14 121 A1 bekannt. Dort erfolgt die Verbindung der Kuntstoffteile durch eine Verschweißung, d.h. die einzelnen Teile bestehen aus Thermoplasten, da sich Duroplaste nicht durch eine Verschweißung miteinander verbinden lassen. Zur besseren Abdichtung ist zwischen den Kunstsstoffteilen eine Elastomerringdichtung angeordnet.

Schwierigkeiten bereiten derartige Kunststoffgehäuse aus Thermoplasten vor allem deshalb, weil unter Druck- und Temperatureinwirkungen Verformungen auftreten können. Dies ist besonders bei Leistungskondensatoren (z. B. IGBT- oder GTO-Kondensatoren) kritisch, da bei diesen axialen Bauformen eine Längung des Kondensators während der Betriebsdauer nicht erfolgen soll und damit die bisher üblichen Abreißsicherungs-Bauweisen nicht anwendbar sind. Deshalb muß mit einem Ansteigen des Kondensatorinnendruckes (z. B. auf 20 bis 30 bar) im Laufe der Betriebszeit gerechnet werden.

Aufgabe der Erfindung ist es daher, einen elektrischen Wickelkondensator der eingangs genannten Art anzugeben, der ein Gehäuse aufweist, das dieser Dauerbelastung bei gleichzeitig eventuell auftretenden hohen Umgebungstemperaturen (+80°C) ohne Bruch oder zu starke Verformungen (Materialfluß) standhält.

Diese Aufgabe wird erfindungsgemäß dadurch gelöst, daß in der Wandung des Kunststoffrohrs eine Verstärkung aus Metall angeordnet ist, und daß die Verstärkung über die Rohrenden übersteht.

Die Verstärkung kann entweder aus einem gegebenenfalls gelochten Metallrohr, einem gerollten Blech oder aus einem Metallgeflecht bestehen.

Es ist weiterhin auch möglich, Kunststoffrohr und Kunststoffscheiben allein oder in Verbindung mit der Verschraubung zu verschweißen.

Ferner kann zwischen Kunststoffrohr und Kunststoffscheiben zumindest je ein Dichtring angeordnet werden.

Die Erfindung wird im folgenden anhand von Ausführungsbeispielen näher erläutert.

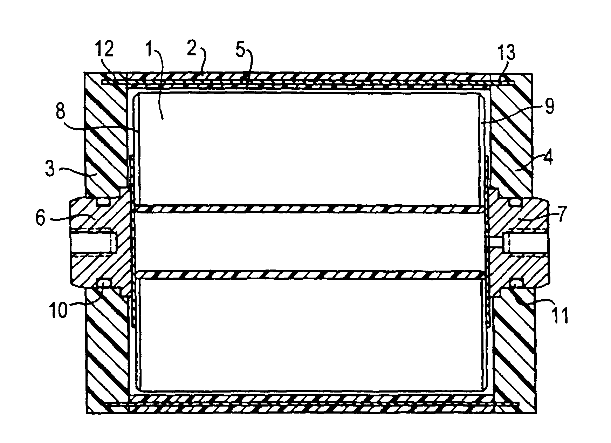

In der dazugehörenden Zeichnung mit einer einzigen Figur ist ein Kondensatorwickel 1 dargestellt, der in ein Kunststoffgehäuse eingebaut ist, das aus einem Kunststoffrohr 2 besteht, welches an beiden Enden mit Abschlußscheiben 3, 4 verschlossen ist. In der Wandung des Kunststoffrohrs 3 ist eine metallische Verstärkung 5 angeordnet, die beispielsweise beim Spritzgießen des Kunststoffrohrs 3 gleich mit umspritzt wird. Die metallische Verstärkung 5 besteht entweder aus einem gegebenenfalls gelochten Metallrohr, einem gerollten Blech oder einem Metallgeflecht.

In den Abschlußscheiben 3, 4 sind metallische Durchführungselemente 6, 7 angeordnet, die mit auf dem Kondensator 1 angeordneten Stirnkontaktschichten 8, 9 elektrisch leitend verbunden sind. Zur besseren Abdichtung zwischen Durchführungselementen 6, 7 und Abschlußscheibe 3, 4 ist jeweils ein Dichtungsring 10, 11 zwischen Durchführungselementen 6, 7 und Abschlußscheiben 3, 4 angeordnet.

Die metallische Verstärkung 5 überragt an ihren Enden 12, 13 das Kunststoffrohr 2 und wird zum Fügen des Kunststoffrohrs 2 mit den Abschlußscheiben 3, 4 benutzt. Dazu greifen die überstehenden Enden 12, 13 der metallischen Verstärkung 5 in in der Figur nicht dargestellte Aussparungen in den Abschlußscheiben 3, 4 ein. Der Verschluß kann, falls Kunststoffrohr 2 und Abschlußscheiben 3, 4 aus Thermoplasten bestehen, durch eine Hochfrequenz-Erwärmung der überstehenden Enden 12, 13 erfolgen, wodurch ein Verschweißen an diesen Stellen erfolgt.

Falls Kunststoffrohr 2 und Abschlußscheiben 3, 4 aus Duroplasten bestehen (bei denen ein Verschweißen nicht möglich ist) erfolgt an den Fügestellen eine Verklebung.

Weiterhin ist es möglich, in den Enden 12, 13 Gewindegänge anzuformen, so daß ein Verschrauben der Abschlußscheiben 3, 4 mit dem Rohr 2 möglich ist, wobei es zweckmäßig ist, gleichzeitig eine Harz/Klebeabdichtung vorzunehmen, was sowohl für Duro- als auch Thermoplaste möglich ist.

Für eine zusätzliche Absicherung bei einer Verschraubung ist es auch noch möglich, eine Verstiftung im Verschraubungsbereich anzubringen.

Es ist auch möglich, zur besseren Abdichtung zwischen Kunststoffrohr 2 und Abschlußscheiben 3 im Bereich der überstehenden Enden 12, 13 der metallischen Verstärkung 2 Elastomer-Dichtungsringe anzuordnen.

Ferner besteht die Möglichkeit, die Enden 12, 13 der metallischen Verstärkung 2 derart zu formen, daß z. B. mehrere Lappen am Umfang durch den Deckel gesteckt und auf diesen umgebogen (bzw. verkrimpt) werden.

## Patentansprüche

1. Elektrischer Wickelkondensator (1), insbesondere Leistungskondensator, aus zumindest einem auf einem Kernrohr angeordneten Kondensatorwickel, bei dem die Wickelstirnseiten mit Schoopschichten versehen sind und der bis auf den Durchführungsbereich für äußere Anschlüsse (6, 7) mit einer Kunststoffumhüllung versehen ist, die aus einem Kunststoffrohr (2) besteht, das an beiden Enden mit einer Kunststoffscheibe (3, 4) verschlossen ist,
**dadurch gekennzeichnet**,
daß in der Wandung des Kunststoffrohrs (2) eine Verstärkung (5) aus Metall angeordnet ist, und daß die Verstärkung (5) über die Rohrenden übersteht.

2. Elektrischer Wickelkondensator nach Anspruch 1
**dadurch gekennzeichnet,**
daß die Verstärkung (5) aus einem Metallrohr besteht.

3. Elektrischer Wickelkondensator nach Anspruch 2,
**dadurch gekennzeichnet,**
daß das Metallrohr gelocht ist.

4. Elektrischer Wickelkondensator nach Anspruch 1,
**dadurch gekennzeichnet,**
daß die Verstärkung (5) aus einem gerollten Blech besteht.

5. Elektrischer Wickelkondensator nach Anspruch 1,
**dadurch gekennzeichnet**,
daß die Verstärkung (5) aus einem Metallgeflecht besteht.

6. Elektrischer Wickelkondensator nach einem der Ansprüche 1 bis 5,
**dadurch gekennzeichnet,**
daß das Kunststoffrohr (2) mit den Kunststoffscheiben (3, 4) verschraubt ist.

7. Elektrischer Wickelkondensator nach einem der Ansprüche 1 bis 6,
**dadurch gekennzeichnet,**
daß das Kunststoffrohr (2) mit den Kunststoffscheiben (3, 4) verschweißt und/oder verklebt ist.

8. Elektrischer Wickelkondensator nach einem der Ansprüche 1 bis 7,
**dadurch gekennzeichnet,**
daß zwischen Kunststoffrohr (2) und Kunststoffscheiben (3, 4) zumindest je ein Dichtring angeordnet ist.

## Claims

1. Electrical wound capacitor (1), in particular a power capacitor, comprising at least one capacitor winding which is arranged on a core tube, in the case of which the winding ends are provided with sprayed-metal layers and which is provided, except for the region for external connections (6, 7) to pass through, with a plastic sheath which is composed of a plastic tube (2) that is sealed at both ends by a plastic disc (3, 4), characterized in that a reinforced region (5) made of metal is arranged in the wall of the plastic tube (2), and in that the reinforced region (5) projects beyond the tube ends.

2. Electrical wound capacitor as claimed in Claim 1, characterized in that the reinforced region (5) is composed of a metal tube.

3. Electrical wound capacitor according to Claim 2, characterized in that the metal tube is perforated.

4. Electrical wound capacitor according to Claim 1, characterized in that the reinforced region (5) is composed of a rolled metal sheet.

5. Electrical wound capacitor according to Claim 1, characterized in that the reinforced region (5) is composed of a metal mesh.

6. Electrical wound capacitor according to one of Claims 1 to 5,characterized in that the plastic tube (2) is screwed to the plastic discs (3, 4).

7. Electrical wound capacitor according to one of Claims 1 to 6, characterized in that the plastic tube (2) is welded and/or bonded to the plastic discs (3, 4).

8. Electrical wound capacitor according to one of Claims 1 to 7, characterized in that at least one sealing ring is in each case arranged between the plastic tube (2) and the plastic discs (3, 4).

## Revendications

1. Condensateur (1) électrique bobiné, notamment condensateur de puissance, constitué d'au moins un bobinage de condensateur disposé sur un tube d'enroulement, bobinage dont les côtés frontaux sont pourvus de couches de schoopage et qui est pourvu, à l'exception de la région de passage pour des connexions (6, 7) extérieures, d'une enveloppe en matière plastique consistant en un tube (2) en matière plastique qui est fermé aux deux extrémités par un disque (3, 4) en matière plastique,
**caractérisé** en ce qu'un renfort (5) en métal est disposé dans la paroi du tube (2) en matière plastique, et en ce que le renfort (5) dépasse des extrémités du tube.

2. Condensateur électrique bobiné suivant la revendication 1, **caractérisé** en ce que le renfort (5) consiste en un tube métallique.

3. Condensateur électrique bobiné suivant la revendication 2. **caractérisé** en ce que le tube métallique est perforé.

4. Condensateur électrique bobiné suivant la revendication 1. **caractérisé** en ce que le renfort (5) consiste en une tôle enroulée.

5. Condensateur électrique bobiné suivant la revendication 1, **caractérisé** en ce que le renfort (5) consiste en un treillis métallique.

6. Condensateur électrique bobiné suivant l'une des revendications 1 à 5, **caractérisé** en ce que le tube (2) en matière plastique est assemblé aux disques (3, 4) en matière plastique par vissage.

7. Condensateur électrique bobiné suivant l'une des revendications 1 à 6, **caractérisé** en ce que le tube (2) en matière plastique est assemblé aux disques (3, 4) en matière plastique par soudage et/ou collage.

8. Condensateur électrique bobiné suivant l'une des revendications 1 à 7, **caractérisé** en ce qu'au moins une bague d'étanchéité est disposée respectivement entre le tube (2) en matière plastique et les disques (3, 4) en matière plastique.
